# EUROPÄISCHE PATENTSCHRIFT

(11) **EP 3 026 514 B1**
(45) Veröffentlichungstag und Bekanntmachung des Hinweises auf die Patenterteilung: **06.06.2018**
(21) Anmeldenummer: 15196285.9
(22) Anmeldetag: 25.11.2015
(51) Int. Cl.: G05B 19/042, G05B 9/02

(54) **AUTOMATISIERUNGSANLAGE UND VERFAHREN ZUR EXTERNEN STEUERUNG EINES SELBSTTESTALGORITHMUS IN EINER DEZENTRALEN SICHERHEITSEINRICHTUNG**
AUTOMATION SYSTEM AND METHOD FOR EXTERNAL CONTROL OF A SELF-TESTING ALGORITHM IN A DECENTRALISED SAFETY DEVICE
INSTALLATION D'AUTOMATISATION ET PROCÉDÉ DE COMMANDE EXTERNE D'UN ALGORITHME D'AUTOCONTRÔLE DANS UN DISPOSITIF DE SÉCURITÉ DÉCENTRALISÉ

(30) Priorität: 25.11.2014 DE 102014117259
(43) Veröffentlichungstag der Anmeldung: 01.06.2016
(73) Patentinhaber: PHOENIX CONTACT GmbH & Co. KG, 32825 Blomberg (DE)
(72) Erfinder: Horn, Steffen, 32825 Blomberg (DE)
(74) Vertreter: Blumbach · Zinngrebe Patent- und Rechtsanwälte

(56) Entgegenhaltungen:
- WO-A2-98/44399
- CA-A1- 2 406 719
- DE-A1-102004 015 617

## Beschreibung

Die Erfindung betrifft eine Automatisierungsanlage, eine dezentrale Sicherheitseinrichtung, eine zentrale Sicherheitseinrichtung sowie ein Verfahren zur externen Steuerung eines Selbsttestalgorithmus in wenigstens einer dezentralen Sicherheitseinrichtung.

Um das Risiko für Mensch oder Umwelt bei automatisierten Prozessen, Maschinen und Anlagen zu reduzieren, werden Sicherheitsfunktionen, wie zum Beispiel das Abschalten einer Maschine oder Anlage nach Drücken eines Not-Aus-Tasters oder die Überführung der Anlage oder Maschine in einen sicheren Zustand nach Erkennen eines Fehlers realisiert. Hierzu werden zunehmend fehlersichere Automatisierungssysteme eingesetzt.

In aktuellen Maschinen und Anlagen werden abhängig von der Ausdehnung der Anlage und vom Automatisierungsgrad Kommunikationsnetzwerke verwendet, die dezentrale E/A-Geräte und zentrale oder dezentrale Steuerungen verbinden. Um eine fehlersichere Übertragung von sicherheitsrelevanten Daten zu ermöglichen, werden diese Kommunikationsnetzwerke durch sichere Netzwerkprotokolle unterstützt.

Fehlersicher Automatisierungssysteme enthalten netzwerkfähige, Mikroprozessor basierte Sicherheitsgeräte, welche abhängig von ihrer Komplexität parametrierbar, konfigurierbar oder programmierbar sind. Bei den Sicherheitsgeräten kann es sich um dezentrale sicherheitsgerichtete E/A-Geräte handeln.

Alle Mikroprozessor basierte Sicherheitsgeräte müssen nach dem Einschalten einen sogenannten Power-On-Selbst-Test, kurz POST genannt, durchlaufen, bevor sie ihre eigentlichen Sicherheitsfunktionen, wie zum Beispiel das sichere Einlesen von Daten, das sichere Ausgeben von Daten, die sichere Übertragung von Daten sowie das sichere Verarbeiten von Daten, ausführen dürfen. Bei Sicherheitsgeräten mit integrierten sicheren Ausgängen müssen diese bis zum erfolgreichen Abschluss des Power-On-Selbst-Testes im sicheren Zustand, typischerweise energielos gehalten werden.

In an sich bekannter Weise umfasst ein Power-On-Selbst-Test Testalgorithmen zum Testen von Hardwarekomponenten, wie zum Beispiel RAM-Speicher, ROM-Speicher, einer CPU sowie zum Testen der angeschlossenen Peripherieverdrahtung.

Die Aufgabe eines POSTs besteht darin, alle möglichen Hardwarefehler nach dem Einschalten eines Sicherheitsgerätes und vor dem Ausführen einer Sicherheitsfunktion zu erkennen. So ist es beispielsweise verboten, bei bestimmten Hardwarefehlern im Betrieb diese Fehler ohne einen gezielten Neustart des Sicherheitsgeräts über "Power On" zu quittieren. Hintergrund ist, dass ein kompletter Neustart des Sicherheitsgerätes und damit ein kompletter Hardwaretest gefordert werden, bevor das Sicherheitsgerät wieder seine eigentliche Sicherheitsfunktion ausführen darf.

Ein Power-On-Selbst-Test nimmt eine gewisse Abarbeitungszeit in Anspruch, die abhängig ist von der Größe und Komplexität der zu testenden Hardwarekomponenten.

Anforderungen aus Maschinenbau und Anlagenbau verlangen, dass alle Geräte nach dem Einschalten eigenständig und möglichst schnell betriebsbereit sein sollen. Diese Anforderung trifft insbesondere bei modularen Maschinenteilen zu, welche in der Betriebsphase der Maschinen dynamisch ab- und wieder angekoppelt werden. Hintergrund sind hier schnelle Taktzeiten in der Betriebsphase oder Umrüstzeiten in der Wartung/Inbetriebnahme. Bei aktuellen Sicherheitsgeräten wirkt sich die relativ lange Abarbeitungszeit eines POSTs besonders nachteilig aus. So vergehen oft mehrere Sekunden oder gar Minuten, bis angekoppelte Sicherheitsgeräte vollständig ihre Funktion ausüben können.

Ein solches sicherheitsgerichtetes Steuerungssystem ist beispielsweise aus der EP 0 972 389 B1 bekannt. Das bekannte Steuerungssystem weist eine Vielzahl von dezentralen Stationen mit Ein- und Ausgängen sowie zumindest eine zentrale Station auf, welche über eine Busleitung miteinander verbunden sind. Die dezentralen Stationen sind lediglich in der Lage, statische Testprogramme intern gesteuert auszuführen.

Aus der DE 10 2004 015 617 A1 ist ein Prozesssteuerungssystem mit integriertem Sicherheitssystem bekannt, welches mehrere Sicherheitsfeldeinrichtungen aufweist, in denen jeweils eine Selbsttestroutine gespeichert ist. Ferner ist mindestens ein Logikauflöser mit wenigstens einer Prüfeinheit vorgesehen, die die in wenigstens einer der Sicherheitsfeldeinrichtungen gespeicherte Selbsttestroutine starten kann, um eine Selbstprüfung an dem jeweiligen Sicherheitsfeldgerät auszuführen.

Aus der WO 98/44399 ist ein Verfahren zur Programmierung eines sicherheitsgerichteten Steuerungssystem mit zentralen und dezentralen Stationen zur Zuweisung von Ein- und Ausgangsinformationen bekannt.

Aus der CA 2 406 719 A1 ist ein Überwachungssystem mit dezentralen Datenverarbeitungseinrichtungen bekannt, die jeweils einen periodischen Selbsttest durchführen und das Ergebnis über ein Netzwerk ausgeben.

In bestimmten Situationen, wie zum Beispiel bei zyklisch auftretenden Power-Ups, ist es jedoch manchmal gar nicht notwendig, die komplette Hardware neu zu testen. Beispielsweise könnte in einem zyklischen An- und Abschaltbetrieb eines Sicherheitsgerätes ein Schnellstart ohne oder mit einem verkürzten POST ausreichen. Diese Möglichkeiten sind nach einer Risikobewertung und den jeweils geforderten Sicherheitskategorien mit den verantwortlichen Behörden zu definieren.

Der Erfindung liegt daher die Aufgabe zugrunde, eine Automatisierungsanlage, eine dezentrale Sicherheitseinrichtung, eine zentrale Sicherheitseinrichtung sowie ein Verfahren zur Verfügung zu stellen, welche ermöglichen, dass Selbsttestalgorithmen von dezentralen Sicherheitsgeräten zeitlich und qualitativ optimiert ausgeführt werden können.

Ein Kerngedanke der Erfindung kann darin gesehen werden, dass in Abhängigkeit eines aufgetretenen Ereignisses die Auswahl und Ausführung eines dem Ereignis zugeordneten Selbsttestalgorithmus in einem dezentralen Sicherheitsgeräts von außen gesteuert wird. Bei dem Ereignis handelt es sich vorzugsweise um ein externes Ereignis, welches unabhängig von dem dezentralen Sicherheitsgerät ist, welches den Selbsttestalgorithmus ausführen soll. Auf diese Weise wird erreicht, dass das dezentrale Sicherheitsgerät zum Beispiel in Abhängigkeit von seinem applikativen Umfeld - das kann der Zustand einer Maschine, einer Anlage oder eines auszuführenden oder laufenden Prozesses sein - einen adäquaten Selbsttestalgorithmus ausführen kann. Mit anderen Worten steuern außerhalb der dezentralen Sicherheitseinrichtung auftretende Ereignisse den internen Hardwaretest des Sicherheitsgeräts, und zwar sowohl hinsichtlich eines Power-On-Selbst-Tests als auch anderer, zum Beispiel zeitlich bedingter Tests.

Dank der Erfindung ist es möglich, ereignisabhängig zum Beispiel einen verkürzten Schnellstart des jeweiligen Sicherheitsgerätes zu erlauben, indem ein Selbsttestalgorithmus gestartet wird, der zeitlich gegenüber einem kompletten Selbsttestalgorithmus verkürzt ist.

Die Erfindung wird nachfolgend anhand einiger Ausführungsbeispiele in Verbindung mit den beiliegenden Zeichnungen näher erläutert. Es zeigen:
- Fig. 1: eine schematische Darstellung einer beispielhaften Automatisierungsanlage, in welcher die Erfindung verwirklicht ist,
- Fig. 2: ein Blockschaltbild einer in Fig. 1 gezeigten dezentralen Sicherheitseinrichtung, welche beispielhaft als sicherheitsgerichtetes Ausgangsgerät ausgebildet ist,
- Fig. 3: ein Blockschaltbild einer weiteren, in Fig. 1 gezeigten dezentralen Sicherheitseinrichtung, welche beispielhaft als sicherheitsgerichtetes Eingangsgerät ausgebildet ist,
- Fig. 4: ein Blockschaltbild einer beispielhaften überlagerten Steuereinrichtung, welche in Figur 1 gezeigt ist, und
- Fig. 5: ein Zustandsdiagramm für den zeitlichen Ablauf eines verkürzten und eines kompletten POST in einer dezentralen Sicherheitseinrichtung.

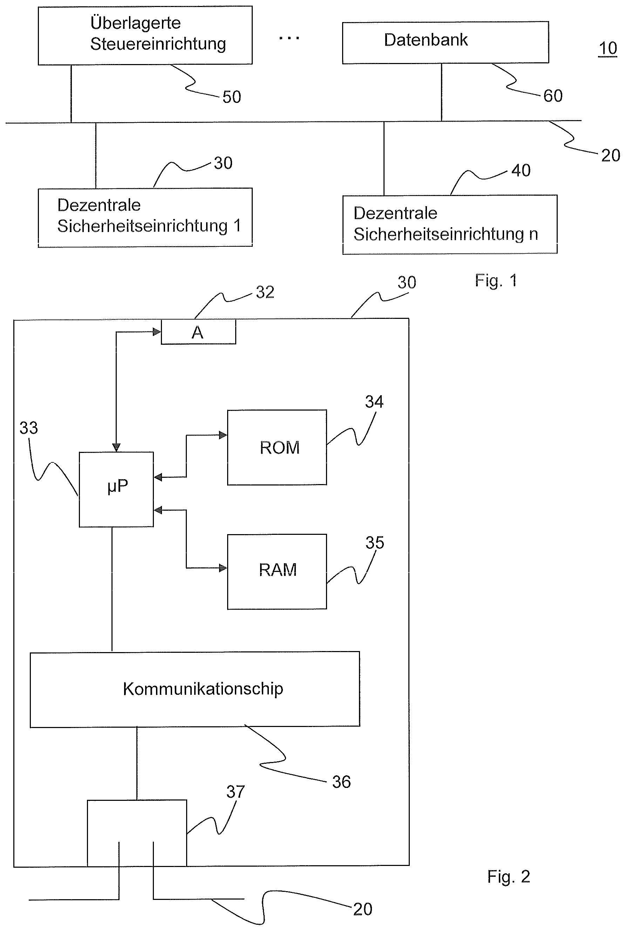

In Fig. 1 ist eine beispielhafte Automatisierungsanlage 10 dargestellt, welche zum fehlersicheren Betrieb ausgebildet sein kann. Fehlersicher bedeutet unter anderem, dass von der Automatisierungsanlage 10 Maßnahmen zum sicheren Erkennen und Beheben von Fehlern bei der Datenübertragung vorgesehen sind und Sicherheitsfunktionen bei einem fehlerhaften Betrieb von Maschinen oder der Anlage sicher ausgelöst werden.

Die Automatisierungsanlage 10 weist ein Kommunikationsnetzwerk 20 auf, welches beispielsweise ein ethernetbasiertes Netzwerk sein kann, über welches Daten in Form von Telegrammen übertragen werden. Angemerkt sei, dass das Kommunikationsnetzwerk auch ein drahtloses Netzwerk sein kann.

An das Kommunikationsnetzwerk 20 ist wenigstens eine dezentrale Sicherheitseinrichtung angebunden. Im vorliegenden Beispiel ist eine Anzahl von n dezentralen Sicherheitseinrichtungen 30, 40 an das Kommunikationsnetzwerk 20 angeschlossen. Die dezentralen Sicherheitseinrichtungen 30, 40 können zum Beispiel als Sicherheitsrelais, als sicherheitsgerichtetes E/A-Gerät, als sichere, dezentrale Steuereinrichtung, als Maschine oder dergleichen ausgebildet sein. Weiterhin ist eine steuerungsfähige Einrichtung 50 vorgesehen, welche getrennt von den dezentralen Sicherheitseinrichtungen 30, 40 an das Kommunikationsnetzwerk 20 angeschlossen ist. In dem gezeigten Beispiel ist die steuerungsfähige Einrichtung 50 vorzugsweise als zentrale überlagerte Steuereinrichtung ausgebildet. Denkbar ist auch, dass wenigstens eine der dezentralen Sicherheitseinrichtungen 30, 40 die Funktion der steuerungsfähigen Einrichtung 50 übernimmt. Alternativ kann die steuerungsfähige Einrichtung 50 auch eine weitere dezentrale Sicherheitseinrichtung sein. Die dezentralen Sicherheitseinrichtungen 30, 40 und die überlagerte Steuereinrichtung 50 verfügen jeweils über eine Netzwerkschnittstelle, über die sie an das Kommunikationsnetzwerk 20 angeschlossen werden können.

Optional kann an das Kommunikationsnetzwerk 20 eine separate Speichereinrichtung 60 in Form einer Datenbank 60 oder eines Speichersystems angeschlossen sein. In der Speichereinrichtung 60 können mehrere unterschiedliche Selbsttestalgorithmen gespeichert sein, welche von den dezentralen Sicherheitseinrichtungen 30, 40 unter Mitwirkung bzw. Steuerung der überlagerten Steuereinrichtung 50 ausgeführt werden können. Die Speichereinrichtung 60 weist eine Netzwerkschnittstelle auf, über die sie an das Kommunikationsnetzwerk 20 angeschlossen werden kann. Die Speichereinrichtung 60 ist dazu ausgebildet, auf Anforderung der überlagerten Steuereinrichtung 50 einen Selbsttestalgorithmus auszuwählen und zur überlagerten Steuereinrichtung 50 oder direkt zu der dezentralen Sicherheitseinrichtung 30 und/oder zur dezentralen Sicherheitseinrichtung 40 zu übertragen.

Nunmehr betrachten wir Fig. 2, welche einen beispielhaften Aufbau der dezentralen Sicherheitseinrichtung 30 zeigt.

Die beispielhafte dezentrale Sicherheitseinrichtung 30 ist als sicherheitsgerichtetes Ausgangsgerät ausgebildet, welches einen sicheren Ausgang 32 aufweist. Je nach Anwendungsfall kann an den Ausgang 32 beispielsweise ein Aktor, wie zum Beispiel eine Maschine oder ein Roboter angeschlossen sein. Die dezentrale Sicherheitseinrichtung 30 weist ferner eine Netzwerkschnittstelle 37 auf, über die sie an das Kommunikationsnetzwerk 20 angeschlossen werden kann. Weiterhin ist eine Auswerte- und Steuereinheit 33 vorgesehen, welche unter anderem dazu ausgebildet ist, unter Steuerung der steuerungsfähigen Einrichtung 50 einen ereignisabhängigen Selbsttestalgorithmus auszuführen. Bei der Auswerte- und Steuereinheit 33 kann es sich um einen Mikroprozessor oder um einen Mikrokontroller handeln, der programmierbar ausgebildet sein kann. Darüber hinaus steuert und überwacht die Auswerte- und Steuereinheit 33 den Betrieb und die Funktion der dezentralen Sicherheitseinrichtung 30. Hierzu können in einem Speicher 34, welcher zum Beispiel als Festspeicher oder RAM ausgebildet ist, geeignete Betriebs- und Steuerprogramme abgespeichert sein.

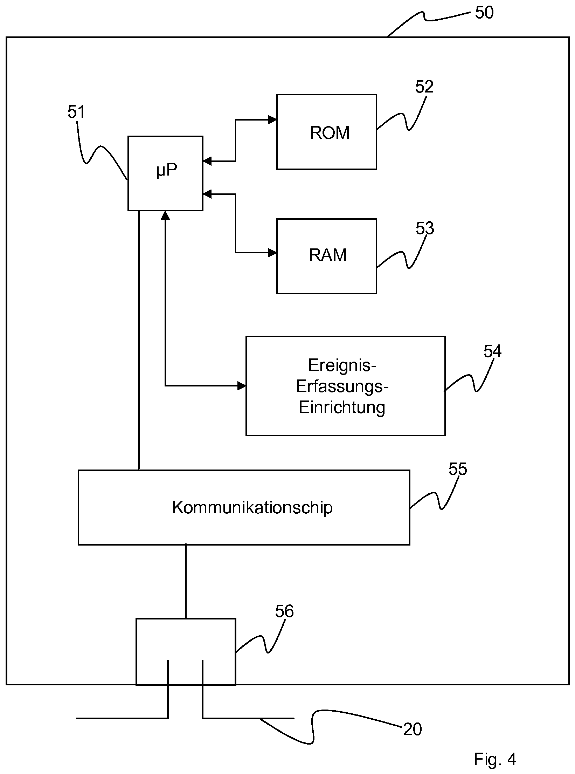

Die dezentrale Sicherheitseinrichtung 30 kann einen weiteren Speicher 35 aufweisen, in welchem unterschiedliche Selbsttestalgorithmen, insbesondere ein vollständiger und ein verkürzter Selbsttestalgorithmus abgelegt sind. Bei dem Speicher 35 kann es sich um einen RAM-Speicher handeln. Bereits an dieser Stelle sei erwähnt, dass die unterschiedlichen Selbsttestalgorithmen vorab vom Hersteller oder vom Anwender in den Speicher 35 abgelegt werden können. Alternativ ist auch denkbar, dass in den Speicher 35 ein Selbsttestalgorithmus beispielsweise aus der Datenbank 60 erst runtergeladen wird, wenn dieser unter Ansprechen auf ein erfasstes Ereignis ausgeführt werden soll. Zusätzlich oder alternativ können die zu verwendenden Selbsttestalgorithmen auch in einem Speicher 53 der überlagerten Steuereinrichtung 50 hinterlegt sein, wie dies in Fig. 4 dargestellt ist.

Die dezentrale Sicherheitseinrichtung 30 verfügt weiterhin über einen Kommunikationschip 36, über den die Sicherheitseinrichtung 30 über das Kommunikationsnetzwerk 20 mit den weiteren angeschalteten Komponenten kommunizieren kann. Ist das Kommunikationsnetzwerk ein ethernetbasiertes Netz, so wird der Kommunikationschip 36 ethernetfähig sein.

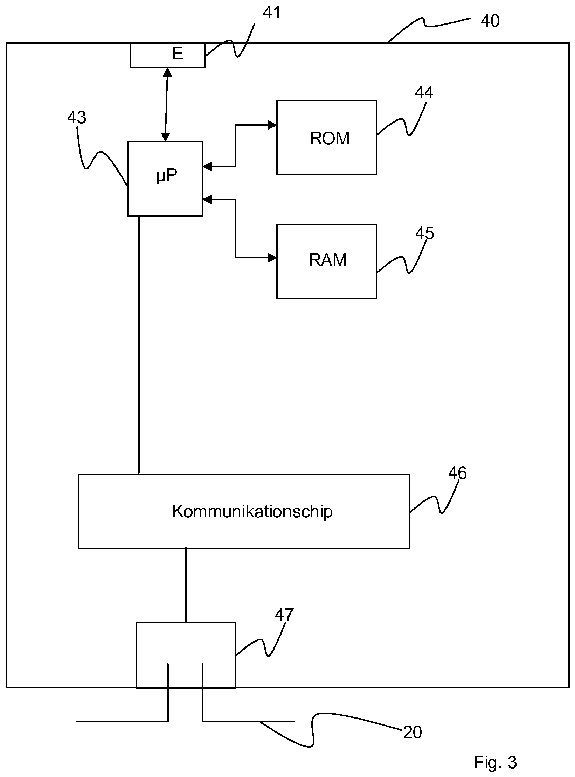

Die dezentrale Sicherheitseinrichtung 40 kann in ihrem Aufbau und in ihrer Funktionsweise im Wesentlichen gleich oder auch identisch zur dezentralen Sicherheitseinrichtung 30 sein. Beim erläuterten Beispiel ist die dezentrale Sicherheitseinrichtung 40 als sicherheitsgerichtetes Eingangsgerät ausgebildet, welche in Fig. 3 gezeigt ist. Sie weist beispielsweise einen sicheren Eingang 41 auf, an welchem ein Sensor, zum Beispiel eine Not-Aus-Schalter, angeschlossen sein kann. Im Übrigen weist die dezentrale Sicherheitseinrichtung 40 einen Festspeicher 44, der in seinem Aufbau und seiner Funktion dem Speicher 34 entsprechen kann, einen Speicher 45, der in seinem Aufbau und seiner Funktion dem Speicher 35 entsprechen kann, ein Kommunikationschip 46, welches in seinem Aufbau und seiner Funktion dem Kommunikationschip 36 entsprechen kann, und eine Netzwerkschnittstelle 47, welche in ihrem Aufbau und in ihrer Funktion der Netzwerkschnittstelle 37 entsprechen kann, auf. Im Unterschied zur dezentralen Sicherheitseinrichtung 30 ist im Speicher 44 ein Betriebs- und Steuerungsprogramm gespeichert, welches die Funktion eines sicherheitsgerichteten Eingangsgeräts überwacht und steuert.

Fig. 4 zeigt den prinzipiellen Aufbau der als überlagerte Steuereinrichtung ausgebildeten, steuerungsfähigen Einrichtung 50. Diese weist eine Auswerte- und Steuereinheit 51 auf, welche als Mikroprozessor oder Mikrocontroller ausgebildet sein kann. Die Auswerte- und Steuereinheit 51 ist mit dem Speicher 53 verbunden, der als RAM-Speicher ausgebildet sein kann. Im Speicher 53 können verschiedene Selbsttestalgorithmen abgelegt sein. Ferner kommuniziert der Mikroprozessor 51 mit einem Speicher 52, welcher als ROM-Speicher ausgebildet sein kann. In diesem Speicher sind unter anderem die Programme zur Steuerung und Überwachung der überlagerten Steuereinrichtung 50 gespeichert.

Zudem weist die überlagerte Steuereinrichtung 50 eine Ereignis-Erfassungseinrichtung 54 auf, die mit dem Mikroprozessor 51 verbunden sein kann. Die Ereignis-Erfassungseinrichtung 54 kann auch in der Auswerte- und Steuereinrichtung 51 integriert sein.

Die steuerungsfähige Einrichtung 50 bzw. die Ereignis-Erfassungseinrichtung 54 ist dazu ausgebildet, ein vorbestimmtes Ereignis zu erfassen, auszuwerten und unter Ansprechen auf das erfasste Ereignis die dezentrale Sicherheitseinrichtung 30 und/oder die dezentrale Sicherheitseinrichtung 40 zu veranlassen, einen dem erfassten Ereignis zugeordneten Selbsttestalgorithmus auszuführen. Die ereignisabhängige Auswahl eines auszuführenden Selbsttestalgorithmus kann beispielsweise durch folgende Kriterien festgelegt werden:
- Applikationsabhängig, wenn zum Beispiel ein Maschinenteil gerade in einem mehr oder weniger riskobehafteten Betrieb läuft.
- Zeitabhängig, wenn zum Beispiel bis zum nächsten vollständigen RAM Test noch sieben Stunden vergehen dürfen.
- Lastabhängig, wenn zum Beispiel im Moment die Ressourcenauslastung des Kommunikationsnetzwerks 20 einen vorgegebenen Schwellwert unterschreitet oder überschreitet.
- Schaltzyklenabhängig, wenn zum Beispiel ein halbes Jahr kein Signalwechsel an einem Sicherheitsrelais ausgeführt wurde, so dass nunmehr die Schaltbarkeit getestet werden müsste.

Diese Kriterien bzw. Zustände oder Ereignisse können von der steuerungsfähigen Einrichtung 50, zum Beispiel von der Ereignis-Erfassungseinrichtung 54 überwacht, erfasst und ausgewertet werden.

Als vorbestimmte Ereignisse oder Kriterien können zudem vorbestimmte Zeitpunkte, zum Beispiel der erstmalige Start der Automatisierungsanlage 10, das erstmalige Anschalten einer dezentralen Sicherheitseinrichtung, andere, vom Betreiber der Automatisierungsanlage 10 definierte Zeitpunkte, ein vorbestimmter Zustand der Automatisierungsanlage, wie zum Beispiel das Entfernen oder Hinzufügen einer dezentralen Sicherheitseinrichtung und/oder ein Zustand beziehungsweise eine Zustandsänderung eines auszuführenden Prozesses berücksichtigt und von der Ereignis-Erfassungseinrichtung 54 erfasst und ausgewertet werden.

Angemerkt sei, dass jedem vorbestimmten, erfassbaren Ereignis ein eigener individueller Selbsttestalgorithmus zugeordnet sein kann. Denkbar ist auch, dass Gruppen aus verschiedenen Ereignissen gebildet werden, denen jeweils ein individueller Selbsttestalgorithmus zugeordnet ist. Diese Zuordnungen werden in der Automatisierungsanlage 10 hinterlegt und sind der steuerungsfähigen Einrichtung 50 bekannt.

Um über das Kommunikationsnetzwerk 20 mit den angeschlossenen dezentralen Sicherheitseinrichtzungen 30 und 40 sowie der Datenbank 60 kommunizieren zu können, weist auch die überlagerte Steuereinrichtung 50 einen entsprechenden Kommunikationschip 55 auf. Über eine Netzwerkschnittstelle 56 ist die überlagerte Steuereinrichtung 50 an das Kommunikationsnetzwerk 20 angeschlossen.

Angemerkt sei an dieser Stelle, dass die in den Fig. 1 bis 4 gezeigten dezentralen Sicherheitseinrichtungen 30 und 40 sowie die überlagerte Steuereinrichtung 50 lediglich der einfacheren Darstellung wegen beispielhaft als einkanalige Einrichtungen dargestellt sind. Insbesondere bei Sicherheitsanwendungen sind diese Einrichtungen mehrkanalig ausgebildet. Beispielsweise weisen die dezentralen Sicherheitseinrichtungen 30 und 40 sowie die überlagerte Steuereinrichtung 50 dann jeweils zwei Mikroprozessoren oder Mikrocontroller zur Auswertung von Daten und zur Steuerung von Sicherheitsfunktionen auf.

Nachfolgend wird die Funktionsweise der in Fig. 1 gezeigten beispielhaften Automatisierungsanlage näher erläutert.

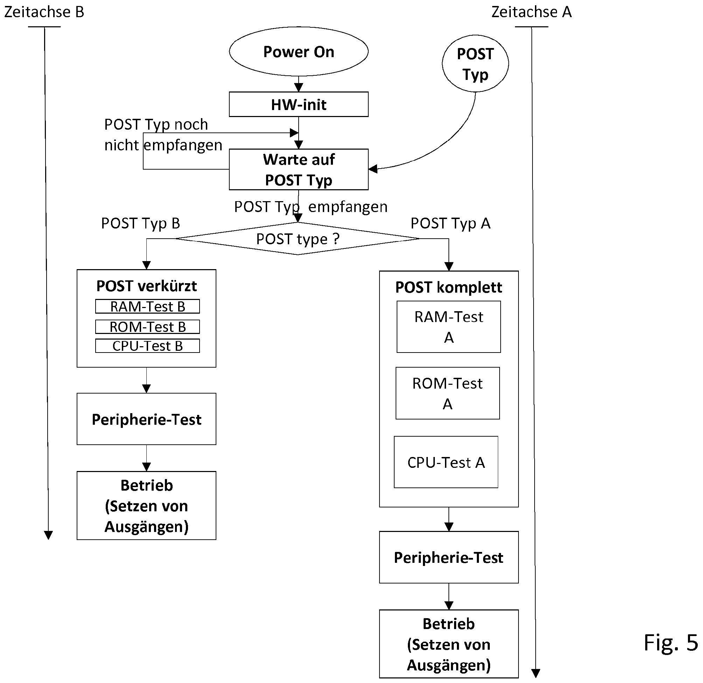

Angenommen sei zunächst, dass in den RAM-Speichern 35 und 45 der dezentralen Sicherheitseinrichtung 30 bzw. 40 ein kompletter Power-On-Selbst-Test sowie ein verkürzter POST abgelegt sind. Diese beiden Selbsttestalgorithmen sind in der Fig. 5 als POST Typ A bzw. POST Typ B dargestellt ist. Zudem kennt die überlagerte Steuereinrichtung 50 die Konfiguration der Automatisierungsanlage 10 und somit auch die Adressen der dezentralen Sicherheitseinrichtrungen 30 und 40 sowie der Datenbank 60.

Weiter sei angenommen, dass die überlagerte Steuereinrichtung 50 beziehungsweise die Ereignis-Erfassungseinrichtung 54 weiß, dass bis zum nächsten kompletten Test der RAM-Speicher der dezentralen Sicherheitseinrichtungen 30 und 40 noch sieben Stunden vergehen dürfen. Zudem soll die dezentrale Sicherheitseinrichtung 30 neu gestartet werden.

Die dezentrale Sicherheitseinrichtung 30 wird neu gestartet, indem zum Beispiel die überlagerte Steuereinrichtung 50 einen Neustartbefehl zur dezentralen Sicherheitseinrichtung 30 überträgt, der vom Mikroprozessor 33 ausgewertet und ausgeführt wird, so dass die dezentrale Sicherheitseinrichtung 30 in den "Power On"-Zustand übergeht, der in Fig. 5 gezeigt ist. Anschließend führt die dezentrale Sicherheitseinrichtung 30 unter Steuerung des Mikroprozessors 33 eine Basisinitialisierung ihrer Hardware durch, die lediglich sicherstellt, dass die dezentrale Sicherheitseinrichtung 30 Signale über das Kommunikationsnetzwerk 20 von der überlagerten Steuereinrichtung 50 Steuersignale empfangen kann, welche der dezentralen Sicherheitseinrichtung 30 mitteilen, welchen POST TYP sie ausführen soll. Die Basisinitialisierung wird in Fig. 5 durch das Zustandfeld "HW-init" repräsentiert. Solange die dezentrale Sicherheitseinrichtung 30 keinen Befehl zur Auswahl eines POST Typs von der überlagerten Steuereinrichtung 50 empfängt, verweilt die dezentrale Sicherheitseinrichtung 30 in einem sicheren Zustand, der in Fig. 5 symbolisch durch das Zustandsfeld "Warte auf POST Typ" dargestellt ist.

Unter Ansprechen auf das erfasste Ereignis, dass die dezentrale Sicherheitseinrichtung 30 neu gestartet worden ist und dass bis zum nächsten kompletten Test der RAM-Speicher 35 und 45 der dezentralen Sicherheitseinrichtung 30 bzw. 40 noch sieben Stunden vergehen dürfen, erzeugt die überlagerte Steuereinrichtung 50 ein Steuersignal, welches den Befehl enthält, den verkürzten POST Typ B auszuführen. Die überlagerte Steuereinrichtung 50 überträgt das Steuersignal in einem Ethernet-Telegramm zur dezentralen Sicherheitseinrichtung 30. Der Mikroprozessor 33 wertet den empfangenen Steuerbefehl aus, liest daraufhin den verkürzten POST Typ B aus dem RAM-Speicher 35 aus und führt diesen aus. Nachdem der Selbsttestalgorithmus vom Typ B erfolgreich ausgeführt worden ist, geht die dezentrale Sicherheitseinrichtung 30 in den Betriebszustand über. Diese Verfahrensschritte sind ebenfalls in Fig. 5 gezeigt.

Ohne die erfindungsgemäßen Maßnahmen würden die dezentralen Sicherheitseinrichtungen 30 und 40 nach jedem Einschalten den statischen, kompletten POST, d.h. den POST vom Typ A, durchführen.

Nunmehr sei ein Szenario angenommen, nach dem die beiden Selbsttestalgorithmen vom POST Typen A und B nicht vorab in den Speichern 35 und 45 der dezentralen Sicherheitseinrichtungen 30 bzw. 40, sondern im Speicher 53 der überlagerten Steuereinrichtung 50 hinterlegt worden sind. In diesem Fall ist die überlagerte Steuereinrichtung 50 dazu ausgebildet, unter Ansprechen auf das erfasste Ereignis, dass nämlich die dezentrale Sicherheitseinrichtung 30 neu gestartet worden ist und dass bis zum nächsten kompletten Test der RAM-Speicher der dezentralen Sicherheitseinrichtungen 30 und 40 noch sieben Stunden vergehen dürfen, den zu diesem Ereignis gehörenden Selbsttestalgorithmus, also den POST-Typ B aus der Speichereinrichtung 53 auszuwählen und diesen zusammen mit dem entsprechenden Steuerbefehl über das Kommunikationsnetzwerk 20 zur dezentralen Steuereinrichtung 30 zu übertragen. Unter Ansprechen auf den empfangenen Steuerbefehl führt der Mikroprozessor 33 der dezentralen Sicherheitseinrichtung 30 den empfangenen, verkürzten POST Typ B aus. Mit anderen Worten wird die dezentrale Sicherheitseinrichtung 30 von außen, dass heißt von der überlagerten Steuereinrichtung 50 gesteuert, um entsprechend eines äußeren Zustands einen adäquaten Selbsttestalgorithmus, im vorliegenden Fall den verkürzten POST vom Typ B auszuführen.

Nunmehr wird ein weiteres Szenario betrachtet, bei dem die beiden POST Typen A und B weder in den dezentralen Sicherheitseinrichtung 30 und 40 noch in der überlagerten Steuereinrichtung 50 hinterlegt sind. Stattdessen befinden sich die beiden Selbsttestalgorithmen beispielsweise in der netzwerkfähigen Datenbank 60. Wiederum sei angenommen, dass die dezentrale Sicherheitseinrichtung 30 unter Kontrolle der überlagerten Steuereinrichtung 50 gestartet worden ist, welche wiederum weiß, dass bis zum nächsten kompletten Test der RAM-Speicher der dezentralen Sicherheitseinrichtungen 30 und 40 noch sieben Stunden vergehen dürfen. Unter Ansprechen auf dieses Ereignis bzw. diesen Anlagenzustand überträgt die überlagerte Steuereinrichtung 50 zunächst einen POST-Typ-B-Anforderungsbefehl an die Datenbank 60, welche unter Ansprechen auf den Anforderungsbefehl den verkürzten POST vom Typ B zur überlagerten Steuereinrichtung 50 überträgt. Die überlagerte Steuereinrichtung 50 überträgt nunmehr einen entsprechenden Steuerbefehl zusammen mit dem POST Typ B zur dezentralen Sicherheitseinrichtung 30. Der Mikroprozessor 33 wertet den empfangenen Steuerbefehl aus und führt als Antwort darauf den empfangenen POST Typ B aus.

Angemerkt sei an dieser Stelle, dass auch mehr als zwei verschiedene Selbsttestalgorithmen, wie sie in Figur 5 dargestellt sind, in den Speichern 35 und 45, und/oder dem Speicher 53 und/oder der Datenbank 60 gespeichert werden können, um zum Beispiel eine dynamische Adaption der Selbsttestalgorithmen in einem laufenden Betrieb zu ermöglichen. So ist denkbar, dass die überlagerte Steuereinrichtung 50 in Abhängigkeit von Schaltzyklen, Diagnoseinformationen oder aktuellen Prozesszuständen dedizierten dezentralen Sicherheitseinrichtungen, zum Beispiel den dezentralen Sicherheitseinrichtungen 30 und 40, vorübergehend umfangreichere Selbsttestalgorithmen verordnen kann, um zum Beispiel einen höheren Grad an Diagnose zu erreichen. Im Gegenzug könnten bei Überlastungen des Kommunikationsnetzwerkes 20, ein Ereignis, welches ebenfalls von der Ereignis-Erfassungseinrichtung 54 der überlagerten Steuereinrichtung 50 erfasst werden kann, vorübergehend oder kurzseitig bestimmte Selbsttestalgorithmen verkürzt ausgeführt oder gar ausgeschaltet werden, solange dies von den Sicherheitsbetrachtungen her möglich ist.

Denkbar ist weiter, dass die dezentralen Sicherheitseinrichtungen 30 und 40 ebenfalls eine Ereignis-Erfassungseinrichtung aufweisen und dazu ausgebildet sind, ein vorbestimmtes Ereignis zu erfassen und unter Ansprechen auf das erfasste Ereignis eine andere dezentrale Sicherheitseinrichtung zu veranlassen, einen dem erfassten Ereignis zugeordnete Selbsttestalgorithmus auszuführen. So ist denkbar, dass die dezentralen Sicherheitseinrichtungen 30 und 40 sich untereinander gegenseitig beeinflussen und abstimmen können, und zwar in Abhängigkeit eines erfassten vorbestimmten Ereignisses. Es wäre denkbar, dass das Anschalten einer weiteren dezentralen Sicherheitseinrichtung an das Kommunikationsnetzwerk 20 von der dezentralen Sicherheitseinrichtung 30 erfasst wird, welche daraufhin die dezentrale Sicherheitseinrichtung 40 anweist, einen dem entsprechenden Ereignis zugeordneten Selbsttestalgorithmus auszuführen.

Einige der Gesichtspunkte der Erfindung werden nachfolgend noch einmal verallgemeinert zusammengefasst.

In Fig. 1 ist eine beispielhafte Automatisierungsanlage 10 gezeigt, welche als fehlersichere Automatisierungsanlage ausgebildet sein kann. Die Automatisierungsanlage 10 weist wenigstens eine dezentrale Sicherheitseinrichtung 30, 40 auf, welche eine Netzwerkschnittstelle 37 bzw. 47 enthält. Die dezentralen Sicherheitseinrichtungen 30, 40 können zum Beispiel wenigstens einen Ein- und/oder Ausgang aufweisen und somit als dezentrale, sicherheitsgerichtete E/A-Einrichtungen oder als sichere dezentrale Steuerung fungieren. Bei den dezentralen Sicherheitseinrichtungen kann es sich aber auch um Maschinenteile und dergleichen handeln.

Der Automatisierungsanlage 10 weist ferner eine, eine Netzwerkschnittstelle 56 aufweisende steuerungsfähige Einrichtung 50 auf. Die wenigstens eine dezentrale Sicherheitseinrichtung 30, 40 und die steuerungsfähige Einrichtung 50 sind über ein Kommunikationsnetzwerk 20 miteinander verbunden. Die steuerungsfähige Einrichtung 50 ist dazu ausgebildet, ein vorbestimmtes Ereignis zu erfassen und unter Ansprechen auf das erfasste Ereignis die wenigstens eine dezentrale Sicherheitseinrichtung 30, 40 zu veranlassen, einen dem erfassten Ereignis zugeordneten Selbsttestalgorithmus auszuführen. Die wenigstens eine Sicherheitseinrichtung 30, 40 weist eine Auswerte- und Steuereinheit 33 bzw. 43 auf, welche dazu ausgebildet ist, unter Steuerung der steuerungsfähigen Einrichtung 50 den dem erfassten Ereignis zugeordneten Selbsttestalgorithmus auszuführen. Die Auswerte- und Steuereinheit 33 kann als Mikroprozessor oder Mikrokontroller ausgebildet sein.

Vorteilhafter Weise weist die wenigstens eine dezentrale Sicherheitseinrichtung 30, 40 einen Speicher 35 bzw. 45 auf, in welchem unterschiedliche Selbsttestalgorithmen, insbesondere ein vollständiger und ein zeitlich verkürzter Selbsttestalgorithmus abgelegt sind. Die steuerungsfähige Einrichtung 50 ist in diesem Fall dazu ausgebildet, unter Ansprechen auf das erfasste Ereignis ein entsprechendes Steuersignal zu erzeugen und zu der wenigstens einen dezentralen Sicherheitseinrichtung 30, 40 zu übertragen. Die Auswerte- und Steuereinheit 33, 43 der wenigstens einen dezentralen Sicherheitseinrichtung 30, 40 ist dazu ausgebildet, unter Ansprechen auf das Steuersignal den dazugehörenden Selbsttestalgorithmus auszuwählen und auszuführen.

Alternativ oder zusätzlich kann die steuerungsfähige Einrichtung dazu ausgebildet sein, unter Ansprechen auf das erfasste Ereignis den dazugehörenden Selbsttestalgorithmus aus einer Speichereinrichtung 53, 60, in welcher mehrere Selbsttestalgorithmen gespeichert sind, auszuwählen und die Übertragung des ausgewählten Selbsttestalgorithmus zu der wenigstens einen dezentralen Sicherheitseinrichtung 30, 40 zur Ausführung zu veranlassen. Die Speichereinrichtung 53 kann in der steuerungsfähigen Einrichtung 50 implementiert oder als separate Speichereinrichtung 60 mit einer Netzwerkschnittstelle zum Anbinden an das Kommunikationsnetzwerk 20 ausgebildet sein.

Bei der steuerungsfähigen Einrichtung 50 kann es sich um eine zentrale, überlagerte Steuereinrichtung handeln.

Die steuerungsfähige Einrichtung 50 kann auch als eine dezentrale Sicherheitseinrichtung ausgebildet sein.

Vorteilhafter Weise ist die steuerungsfähige Einrichtung 50 dazu ausgebildet, als Ereingis einen vorbestimmten Zeitpunkt und/oder einen vorbestimmten Zustand der Automatisierungsanlage und/oder einen vorbestimmten Zustand eines auszuführenden Prozesses zu erfassen.

Weiterhin ist eine zentrale Steuereinrichtung 50 im Einsatz in einer Automatisierungsanlage vorgesehen. Die zentrale Steuereinrichtung 50 weist eine Netzwerkschnittstelle 56 zum Ankoppeln an ein Kommunikationsnetzwerk 20 auf. Die zentrale Steuereinrichtung 50 weist eine Einrichtung 51 auf, welche dazu ausgebildet ist, unter Ansprechen auf ein erfasstes Ereignis wenigstens eine dezentrale Sicherheitseinrichtung 30, 40, welche am Kommunikationsnetzwerk 20 angebunden ist, zu veranlassen, einen dem erfassten Ereignis zugeordneten Selbsttestalgorithmus auszuführen. Weiter weist die zentrale Steuereinrichtung 50 eine Erfassungseinrichtung 54 auf, die dazu ausgebildet ist, als Ereignis beispielsweise einen vorbestimmten Zeitpunkt, und/oder einen Zustand der Automatisierungsanlage und/oder einen vorbestimmten Zustand eines auszuführenden Prozesses zu erfassen. Angemerkt sei an dieser Stelle, dass ein vorbestimmter Zustand der Automatisierungsanlage beziehungsweise ein vorbestimmter Zustand eines auszuführenden Prozesses auch durch eine entsprechende Zustandsänderung der Automatisierungsanlage oder des auszuführenden Prozesses erfasst werden kann.

Weiter ist eine dezentrale Sicherheitseinrichtung 30, 40 vorgesehen, welche vorteilhafter Weise wenigstens einen Eingang 41 und/oder wenigstens einen Ausgang 32 aufweisen kann. Ferner enthält sie eine Netzwerkschnittstelle 37 zum Anbinden oder Ankoppeln an ein Kommunikationsnetzwerk 20. In der dezentralen Sicherheitseinrichtung 30, 40 ist eine Auswerte- und Steuereinheit 33, 43 implementiert, die dazu ausgebildet ist, unter Steuerung einer separaten steuerungsfähigen Einrichtung 50, welche am Kommunikationsnetzwerk 20 angebunden ist, einen ereignisabhängigen Selbsttestalgorithmus auszuführen.

Die dezentrale Sicherheitseinrichtung 30, 40 kann einen Speicher 35 bzw. 45 aufweisen, in welchem unterschiedliche Selbsttestalgorithmen abgelegt sind, wobei die Auswerte- und Steuereinheit 33 bzw. 43 dazu ausgebildet ist, unter Ansprechen auf ein von der separaten steuerungsfähigen Einrichtung 50 bereitgestelltes Steuersignal den dazugehörenden Selbsttestalgorithmus auszuwählen und auszuführen. Die dezentrale Sicherheitseinrichtung 30, 40 kann eine Einrichtung aufweisen, welche dazu ausgebildet ist, unter Ansprechen auf ein erfasstes Ereignis wenigstens eine andere dezentrale Sicherheitseinrichtung, welche am Kommunikationsnetzwerk 20 angebunden ist zu veranlassen, einen dem erfassten Ereignis zugeordneten Selbsttestalgorithmus auszuführen. Die dezentrale Sicherheitseinrichtung 30, 40 kann hierzu eine Erfassungseinrichtung aufweisen, die dazu ausgebildet ist, als Ereignis einen vorbestimmten Zeitpunkt, und/oder eine Zustandsänderung der Automatisierungsanlage und/oder eine Zustandsänderung eines auszuführenden Prozesses zu erfassen.

Zudem wird ein Verfahren zur externen Steuerung eines Selbsttestalgorithmus in wenigstens einer dezentralen Sicherheitseinrichtung 30, 40 zur Verfügung gestellt, welches folgende Schritte aufweist:
Erfassen eines Ereignisses in einer steuerungsfähigen Einrichtung 50, welche getrennt von der wenigstens einen dezentralen Sicherheitseinrichtung 30, 40 an einem Kommunikationsnetzwerk 20 angebunden ist;
Zuordnen eines vorbestimmten Selbsttestalgorithmus dem erfassten Ereignis;
Veranlassen, unter Steuerung der steuerungsfähigen Einrichtung 50, der wenigstens einen dezentralen Sicherheitseinrichtung 30, 40, einen dem erfassten Ereignis geordneten Selbsttestalgorithmus auszuführen.

Vorzugsweise kann die Zuordnung eines Selbsttestalgorithmus zu wenigstens einem Ereignis in der steuerungsfähigen Einrichtung 50 vorgenommen und dort beispielsweise in Form einer Nachschlagetabelle im Speicher 53 hinterlegt werden.

## Patentansprüche

1. Automatisierungsanlage (10) aufweisend:
wenigstens eine dezentrale Sicherheitseinrichtung (30, 40), welche eine Netzwerkschnittstelle (37, 47) aufweist,
eine, eine Netzwerkschnittstelle (56) aufweisende steuerungsfähige Einrichtung (50) und
ein Kommunikationsnetzwerk (20), über welches die wenigstens eine dezentrale Sicherheitseinrichtung (30, 40) und die steuerungsfähige Einrichtung (50) miteinander verbunden sind, wobei
die wenigstens eine dezentrale Sicherheitseinrichtung (30, 40) einen Speicher (35, 45) aufweist, in welchem unterschiedliche Selbsttestalgorithmen abgelegt sind,
wobei die unterschiedlichen Selbsttestalgorithmen einen vollständigen und einen verkürzten Selbsttestalgorithmus enthalten, dessen Abarbeitungszeit zeitlich gegenüber der Abarbeitungszeit des vollständigen Selbsttestalgorithmus verkürzt ist, wobei die steuerungsfähige Einrichtung (50) dazu ausgebildet ist, ein vorbestimmtes Ereignis zu erfassen und unter Ansprechen auf das erfasste Ereignis ein entsprechendes Steuersignal zu erzeugen und zu der wenigstens einen dezentralen Sicherheitseinrichtung (30, 40) zu übertragen, und wobei
die wenigstens eine dezentrale Sicherheitseinrichtung (30, 40) eine Auswerte- und Steuereinheit (33, 43) aufweist, welche dazu ausgebildet ist, unter Ansprechen auf das Steuersignal den dazugehörenden Selbsttestalgorithmus auszuwählen und auszuführen.

2. Automatisierungsanlage (10) aufweisend:
wenigstens eine dezentrale Sicherheitseinrichtung (30, 40), welche eine Netzwerkschnittstelle (37, 47) aufweist,
eine, eine Netzwerkschnittstelle (56) aufweisende steuerungsfähige Einrichtung (50) und
ein Kommunikationsnetzwerk (20), über welches die wenigstens eine dezentrale Sicherheitseinrichtung (30, 40) und die steuerungsfähige Einrichtung (50) miteinander verbunden sind,
eine Speichereinrichtung (53; 60), in welcher unterschiedliche Selbsttestalgorithmen gespeichert sind, wobei die unterschiedlichen Selbsttestalgorithmen einen vollständigen und einen verkürzten Selbsttestalgorithmus enthalten, dessen Abarbeitungszeit zeitlich gegenüber der Abarbeitungszeit des vollständigen Selbsttestalgorithmus verkürzt ist, wobei die steuerungsfähige Einrichtung (50) dazu ausgebildet ist, ein vorbestimmtes Ereignis zu erfassen und unter Ansprechen auf das erfasste Ereignis den dazugehörenden Selbsttestalgorithmus aus der Speichereinrichtung (53; 60) auszuwählen und die Übertragung des ausgewählten Selbsttestalgorithmus zu der wenigstens einen dezentralen
Sicherheitseinrichtung (30, 40) zur Ausführung zu veranlassen.

3. Automatisierungsanlage nach Anspruch 1 oder 2,
**dadurch gekennzeichnet, dass**
die Selbsttestalgorithmen einen vollständigen Power-On-Selbst-Test (POST) und einen verkürzten Power-On-Selbst-Test, dessen Abarbeitungszeit zeitlich gegenüber der Abarbeitungszeit des vollständigen Power-On-Selbst-Test verkürzt ist, enthalten.

4. Automatisierungsanlage nach Anspruch 2,
**dadurch gekennzeichnet, dass**
die Speichereinrichtung (53) in der steuerungsfähigen Einrichtung (50) implementiert oder als separate Speichereinrichtung (60) mit einer Netzwerkschnittstelle zum Anbinden an das Kommunikationsnetzwerk (20) ausgebildet ist.

5. Automatisierungsanlage nach einem der vorstehenden Ansprüche,
**dadurch gekennzeichnet, dass**
die steuerungsfähige Einrichtung (50) dazu ausgebildet ist, als Ereignis einen vorbestimmten Zeitpunkt, und/oder einen vorbestimmten Zustand der Automatisierungsanlage und/oder einen vorbestimmten Zustand eines auszuführenden Prozesses zu erfassen.

6. Automatisierungsanlage nach einem der vorstehenden Ansprüche,
**dadurch gekennzeichnet, dass**
wenigstens eine dezentrale Sicherheitseinrichtung (30, 40) als sicherheitsgerichtetes E/A-Gerät ausgebildet sind.

7. Automatisierungsanlage nach einem der vorstehenden Ansprüche,
**dadurch gekennzeichnet, dass**
die steuerungsfähige Einrichtung (50) eine zentrale, überlagerte Steuereinrichtung ist.

8. Verfahren zur externen Steuerung eines Selbsttestalgorithmus in wenigstens einer dezentralen Sicherheitseinrichtung (30, 40) einer Automatisierungsanlage (10) gemäß einem der Ansprüche 1 bis 7, mit folgenden Schritten:
Erfassen eines Ereignisses in einer steuerungsfähigen Einrichtung (50), welche getrennt von der wenigstens einen dezentralen Sicherheitseinrichtung (30, 40) an einem Kommunikationsnetzwerk (20) angebunden ist;
Auswählen in Abhängigkeit von dem erfassten Ereignis eines vorbestimmten Selbsttestalgorithmus aus einer Mehrzahl unterschiedlicher Selbsttestalgorithmen,
wobei die unterschiedlichen Selbsttestalgorithmen einen vollständigen und einen verkürzten Selbsttestalgorithmus enthalten, dessen Abarbeitungszeit zeitlich gegenüber der Abarbeitungszeit des vollständigen Selbsttestalgorithmus verkürzt ist;
Veranlassen, unter Steuerung der steuerungsfähigen Einrichtung (50), der wenigstens einen dezentralen Sicherheitseinrichtung (30, 40), den ausgewählten Selbsttestalgorithmus auszuführen.

## Claims

1. An automation system (10), comprising:
at least one decentralized safety device (30, 40) having a network interface (37, 47);
a controllable device (50) having a network interface (56); and
a communication network (20) via which the at least one decentralized safety device (30, 40) and the controllable device (50) are connected to each other; wherein
the at least one decentralized safety device (30, 40) has a memory (35, 45) which stores different self-test algorithms, the different self-test algorithms including a complete self-test algorithm and a truncated self-test algorithm with an execution duration shorter in time than the execution duration of the complete self-test algorithm; wherein
the controllable device (50) is configured to detect a predetermined event and to be responsive to the detected event by generating a corresponding control signal and transmitting it to the at least one decentralized safety device (30, 40); and wherein
the at least one decentralized safety device (30, 40) has an evaluation and control unit (33, 43) which is adapted to be responsive to the control signal by selecting and executing the associated self-test algorithm.

2. An automation system (10), comprising:
at least one decentralized safety device (30, 40) having a network interface (37, 47);
a controllable device (50) having a network interface (56); and
a communication network (20) via which the at least one decentralized safety device (30, 40) and the controllable device (50) are connected to each other;
a memory device (53; 60) which stores different self-test algorithms, the different self-test algorithms including a complete self-test algorithm and a truncated self-test algorithm with an execution duration shorter in time than the execution duration of the complete self-test algorithm; wherein
the controllable device (50) is configured to detect a predetermined event and to be responsive to the detected event by selecting the associated self-test algorithm from the memory device (53; 60) and causing transmission of the selected self-test algorithm to the at least one decentralized safety device (30, 40) for execution.

3. The automation system according to claim 1 or 2, **characterized in that**
the self-test algorithms include a complete power-on-self-test (POST) and a truncated power-on-self-test with an execution duration shorter in time than the execution duration of the complete power-on self-test.

4. The automation system according to claim 2, **characterized in that**
the memory device (53) is implemented in the controllable device (50) or is provided as a separate memory device (60) having a network interface for connection to the communication network (20).

5. The automation system according to any one of the preceding claims, **characterized in that**
the controllable device (50) is configured to detect, as the event, a predetermined time and/or a predetermined state of the automation system and/or a predetermined state of a process to be executed.

6. The automation system according to any one of the preceding claims, **characterized in that**
at least one decentralized safety device (30, 40) is configured as a safety-related I/O device.

7. The automation system according to any one of the preceding claims, **characterized in that**
the controllable device (50) is a central higher level control device.

8. A method for external control of a self-test algorithm in at least one decentralized safety device (30, 40) of an automation system (10) according to any one of claims 1 to 7, comprising the steps of:
detecting an event in a controllable device (50) which is connected to a communication network (20) separately from the at least one decentralized safety device (30, 40) ;
depending on the detected event, selecting a predetermined self-test algorithm from a plurality of different self-test algorithms, the different self-test algorithms including a complete self-test algorithm and a truncated self-test algorithm with an execution duration shorter in time than the execution duration of the complete self-test algorithm;
causing the at least one decentralized safety device (30, 40) to execute the selected self-test algorithm, under control of the controllable device (50).

## Revendications

1. Installation d'automatisation (10) comprenant :
au moins un système de sécurité décentralisé (30, 40), lequel comprend une interface réseau (37, 47),
un système (50) apte à être commandé comprenant une interface réseau (56) et
un réseau de communication (20), par l'intermédiaire duquel ledit au moins un système de sécurité décentralisé (30, 40) et le système (50) apte à être commandé sont reliés l'un à l'autre,
ledit au moins un système de sécurité décentralisé (30, 40) comprenant une mémoire (35, 45) dans laquelle différents algorithmes d'autocontrôle sont mis en mémoire,
les différents algorithmes d'autocontrôle contenant un algorithme d'autocontrôle complet et un algorithme d'autocontrôle raccourci, dont le temps d'exécution est raccourci dans le temps par rapport au temps d'exécution de l'algorithme d'autocontrôle complet,
le système (50) apte à être commandé étant conçu pour détecter un événement prédéfini et, en réponse à l'événement détecté, pour générer un signal de commande correspondant et le transmettre audit au moins un système de sécurité décentralisé (30, 40), et
ledit au moins un système de sécurité décentralisé (30, 40) comprenant une unité d'évaluation et de commande (33, 43), laquelle est conçue pour sélectionner et exécuter l'algorithme d'autocontrôle associé en réponse au signal de commande.

2. Installation d'automatisation (10) comprenant :
au moins un système de sécurité décentralisé (30, 40), lequel comprend une interface réseau (37, 47),
un système (50) apte à être commandé comprenant une interface réseau (56) et
un réseau de communication (20), par l'intermédiaire duquel ledit au moins un système de sécurité décentralisé (30, 40) et le système (50) apte à être commandé sont reliés l'un à l'autre,
un système mémoire (53 ; 60), dans lequel différents algorithmes d'autocontrôle sont mis en mémoire, les différents algorithmes d'autocontrôle contenant un algorithme d'autocontrôle complet et un algorithme d'autocontrôle raccourci, dont le temps d'exécution est raccourci dans le temps par rapport au temps d'exécution de l'algorithme d'autocontrôle complet,
le système (50) apte à être commandé étant conçu pour détecter un événement prédéfini et, en réponse à l'événement détecté, pour sélectionner l'algorithme d'autocontrôle associé dans le système mémoire (53, 60) et pour amener la transmission de l'algorithme d'autocontrôle sélectionné audit au moins un système de sécurité décentralisé (30, 40) afin qu'il l'exécute.

3. Installation d'automatisation selon la revendication 1 ou 2, **caractérisée en ce que** :
les algorithmes d'autocontrôle contiennent un autotest à la mise sous tension complet (POST) et un autotest à la mise sous tension raccourci, dont le temps d'exécution est raccourci dans le temps par rapport au temps d'exécution de l'autotest à la mise sous tension complet.

4. Installation d'automatisation selon la revendication 2, **caractérisée en ce que** :
le système mémoire (53) est implémenté dans le système (50) apte à être commandé ou réalisé sous la forme d'un système mémoire (60) séparé comprenant une interface réseau pour le raccordement au réseau de communication (20).

5. Installation d'automatisation selon l'une quelconque des revendications précédentes, **caractérisée en ce que** :
le système (50) apte à être commandé est conçu pour détecter comme événement un moment prédéfini, et/ou un état prédéfini de l'installation d'automatisation et/ou un état prédéfini d'un processus à exécuter.

6. Installation d'automatisation selon l'une quelconque des revendications précédentes, **caractérisée en ce que** :
au moins un système de sécurité décentralisé (30, 40) est réalisé sous la forme d'un appareil E/S orienté sécurité.

7. Installation d'automatisation selon l'une quelconque des revendications précédentes, **caractérisée en ce que** :
le système (50) apte à être commandé est un système de commande central prioritaire.

8. Procédé de commande externe d'un algorithme d'autocontrôle dans au moins un système de sécurité centralisé (30, 40) d'une installation d'automatisation (10) selon l'une quelconque des revendications 1 à 7, comprenant les étapes suivantes :
la détection d'un événement dans un système (50) apte à être commandé, lequel est raccordé à un réseau de communication (20) séparément dudit au moins un système de sécurité décentralisé (30, 40) ;
la sélection en fonction de l'événement détecté d'un algorithme d'autocontrôle prédéfini à partir d'une pluralité de différents algorithmes d'autocontrôle, les différents algorithmes d'autocontrôle contenant un algorithme d'autocontrôle complet et un algorithme d'autocontrôle raccourci, dont le temps d'exécution est raccourci dans le temps par rapport au temps d'exécution de l'algorithme d'autocontrôle complet ;
l'amenée, par commande du système (50) apte à être commandé, dudit au moins un système de sécurité décentralisé (30, 40) à exécuter l'algorithme d'autocontrôle sélectionné.
